# FASCICULE DE BREVET EUROPEEN

(11) **EP 0 554 347 B1**
(45) Date de publication et mention de la délivrance du brevet: **21.09.1994**
(21) Numéro de dépôt: 91919626.1
(22) Date de dépôt: 24.10.1991
(51) Int. Cl.: A23N 7/00

(54) **MACHINE A EPLUCHER LES VEGETAUX**
SCHÄLMASCHINE FÜR GEMÜSE
MACHINE FOR PEELING VEGETABLES

(30) Priorité: 26.10.1990 FR 9013318
(43) Date de publication de la demande: 11.08.1993
(73) Titulaire: Turatti, Antonio, F-49650 Allonnes (FR)
(72) Inventeur: Turatti, Antonio, F-49650 Allonnes (FR)
(74) Mandataire: Phélip, Bruno
(86) Numéro de dépôt international: FR9100841
(87) Numéro de publication internationale: WO9207479

(56) Documents cités:
- DE-A- 3 534 726
- FR-A- 2 222 031
- FR-A- 2 497 442
- FR-A- 2 507 062
- GB-A- 946 106

## Description

La présente invention se rapporte à une machine à éplucher les végétaux, et elle concerne plus particulièrement une machine à éplucher les fruits et légumes avec un contenant qui reçoit ces végétaux, et un système d'alimentation et d'évacuation en vapeur, de façon à détacher la peau de ces végétaux.

On connait des machines à éplucher les végétaux, qui font appel à la vapeur, comme par exemple la machine KIREMKO. Dans ce genre de machines, il y a une boule pleine et rigide qui tourne sur elle-même de façon à mettre en mouvement les végétaux, tout en envoyant de la vapeur à très forte pression, de l'ordre de 16 à 17 bars, et cela pendant un temps très bref. Puis on coupe la pression d'alimentation de vapeur, et la chûte brutale de température fait éclater la peau des végétaux. La boule tourne sur elle-même au moyen de deux paliers, et l'alimentation et le retour de la vapeur ne peut se faire que par ces paliers. Cependant, on ne peut empêcher une partie de la vapeur de rester en contact des végétaux, ce qui donne de l'eau restante, qui refroidit tout en gênant le phénomène de chûte brutale de la température, d'où un épluchage qui n'est pas parfait. Pour éviter cet inconvénient, il faut envoyer la vapeur pendant beaucoup plus de temps, ce qui fait que cette vapeur attaque non seulement la peau mais aussi une partie de la surface des végétaux, ce qui peut entraîner une perte atteignant jusqu'au 10 à 20% de ceux-ci. Ce phénomène entraîne un temps de cycle relativement long, de l'ordre de 5 minutes, et ce type de machine a une productivité qui ne dépasse pas une tonne par heure. De plus, et afin de garantir un épluchage correct des végétaux, il faut après ce type de machine avoir une deuxième machine de finition. Enfin, pour garantir la casse de la vapeur lors de l'arrêt de l'alimentation de celle-ci, c'est-à-dire pour accélérer au maximum la sortie de vapeur surabondante, il est nécessaire de prévoir un réservoir sous vide qui est alors connecté avec la boule, de manière à garantir la sortie de cette vapeur. Un autre example de ce genre de machines est décrit dans le document FR-A-2507 062.

Ce type de machine présente également l'inconvénient d'avoir un temps de cycle relativement long du fait aussi de l'alimentation centrale de la vapeur par le palier, ce qui fait que le diamètre de cette alimentation est forcément limité, et de plus c'est la même canalisation qui sert à l'alimentation et à l'échappement de la vapeur. Dans ce type de machine, l'alimentation des végétaux se fait par le haut, avec l'axe de la cuve vertical. Cette nécessité entraîne un grand encombrement de la machine en hauteur qui atteint 3 à 4 mètres. De plus, lors de l'écoulement de la charge en fin de cycle, la cuve verticale est retournée vers le bas et le couvercle de fermeture est ouvert pour laisser passer la charge. Du fait de sa structure, ce passage inférieur peut souiller le couvercle, ce qui gênera sa fermeture et nuira à son étanchéité, lors du début du cycle suivant. Enfin, ce genre de machine, du fait de sa hauteur et de sa structure, doit être livrée en pièces détachées, et montée directement sur place. Cette façon de procéder entraîne une augmentation considérable du prix de revient, avec un niveau de qualité très difficile à obtenir par montage sur place.

Le but de la présente invention, est de proposer une machine à éplucher les végétaux du type fruits et légumes, qui permette d'obtenir un épluchage complet à l'aide d'une seule machine, et cela dans un temps de cycle le plus réduit possible, tout en respectant la totalité des végétaux à traiter, et en éliminant que la peau de ceux-ci.

L'invention a ainsi pour objet une machine à éplucher les végétaux du type fruits et légumes, qui comporte un contenant avec un système de chargement et de déchargement de ces végétaux, qui coopère avec un système d'alimentation et d'évacuation en vapeur. Selon une caractéristiquje essentielle de l'invention, le contenant est un panier qui est disposé dans une cuve fixe, dans laquelle ce panier est mobile en rotation. Plus précisément, le panier est animé d'un mouvement en rotation autour de l'axe horizontal de la cuve; et il est incliné par rapport à l'axe de rotation, c'est-à-dire l'axe horizontal de la cuve. Selon une variante de l'invention, le panier comporte un deuxième panier à paroi pleine avec lequel il est solidaire, et qui est symétrique audit panier par rapport à l'axe de rotation. Cette structure permet de diminuer le volume de la cuve entourant le panier, qui est en rotation dans cette cuve.

Le système de circulation de vapeur dans la cuve se fait par l'alimentation en vapeur au moyen d'une canalisation, qui débouche directement dans la cuve fixe.

Et pour le retour de vapeur au moyen d'une canalisation spécifique, qui débouche directement dans cette cuve fixe.

Afin d'améliorer encore les caractéristiques de la machine à éplucher les végétaux selon l'invention, celle-ci comporte un dispositif de nettoyage indépendant, qui consiste en une canalisation d'alimentation de fluide de nettoyage débouchant dans la cuve; et en un départ d'écoulement du type vidange, qui est aménagé dans la partie inférieure de cette cuve.

En résumé, la machine à éplucher les végétaux selon l'invention a un panier qui est muni d'un système de fermeture à mouvement horizontal, et qui comporte un ensemble d'arbres de rotation, qui sont supportés par cette cuve. De plus, le chargement et le déchargement des végétaux s'effectue par une même ouverture aménagée dans le panier; et ils sont réalisés par des moyens de commande en rotation du panier, qui se combinent avec le système de fermeture à mouvement horizontal de ce panier. La machine comporte un bâti qui est constitué d'un socle et de deux montants verticaux. Ces montants verticaux supportent la cuve, et le panier avec son ensemble d'arbres en rotation. La cuve a un dispositif propre de fermeture. Enfin, la machine selon l'invention est munie d'un dispositif d'alimentation et d'évacuation des végétaux, de manière à ce que cette machine forme un seul et même ensemble autonome, qui est supporté par le bâti.

Avantageusement, la cuve est fixéée sur les deux montants du bâti, d'un côté par son fond à l'un des montants, et de l'autre côté par une contre-bride solidaire de la cuve et munie d'une ouverture. La contre-bride est supportée par quatre guides qui sont tenus par une plaque-support qui est fixée sur l'autre montant. Le dispositif de fermeture de la cuve est assuré par une bride, qui vient s'appuyer sur la contre-bride de la cuve, et qui est maintenu en position par l'action d'au moins un vérin hydraulique. Cette bride est immobilisée en rotation par les quatre guides. Selon une variante de réalisation, le dispositif de fermeture de la cuve comporte quatre vérins hydrauliques qui ont un corps fixé sur la bride, et une tige qui est solidaire de la plaque-support. De plus, le dispositif de fermeture de la cuve comporte un système de sécurité mécanique, qui est constitué par des éléments qui pénètrent dans une gorge de cette bride.

Selon un mode de réalisation préférentiel de l'invention, le panier est constitué par un corps cylindrique avec un fond, et un couvercle, qui est muni d'une ouverture. Ces différents éléments ont une paroi, qui est munie de nombreux orifices, de manière à laisser passer la vapeur et le condensat, tout en retenant les végétaux. Le panier est solidaire de l'ensemble d'arbres de rotation, qui est constitué par un arbre d'entraînement avec une bride, et par un arbre support; et tous ces trois éléments sont solidaires les uns des autres. L'arbre support est porté par un palier, qui est fixé au montant du côté du fond de la cuve, tandis que l'arbre d'entraînement et la bride sont portés par un palier, qui est disposé dans la bride de fermeture de la cuve. Afin d'améliorer la tenue du panier, la bride a un ou plusieurs goussets de raccordement, de tenue et de liaison avec le panier. Selon une variante de l'invention, l'arbre support pénètre dans le palier du montant, qui le supporte directement. Selon une autre variante de l'invention, l'arbre support comporte un logement, qui vient se monter sur un embout cylindrique qui est solidaire du palier du montant. La commande en rotation du panier est constituée par un moteur hydraulique, qui est lié à l'arbre d'entraînement, et qui est porté par la bride de fermeture de la cuve.

De façon préférentielle, le système de fermeture à mouvement horizontal du panier comporte un couvercle glissant, qui coulisse sur le panier par l'intermédiaire de glissières horizontales. Ces glissières horizontales appartiennent à un cadre solidaire de la bride, du panier et de l'arbre support. Ce couvercle glissant a une forme qui est conjuguée avec celle du couvercle du panier, de manière à pouvoir recouvrir exactement ce couvercle avec son ouverture. De plus, le couvercle glissant est muni d'un cadre vertical de tenue axiale, qui est immobilisé axialement par une ou plusieurs pattes qui sont liées à la cuve. L'ensemble du panier avec son arbre d'entraînement et son arbre support est déplacé horizontalement par le dispositif de fermeture de la cuve; tandis que la commande en rotation de ce panier est constituée par le moteur hydraulique, qui est lié à l'arbre d'entraînement, et qui est porté par la bride de fermeture de la cuve.

Avantageusement, la cuve est constituée par une partie de forme sensiblement cylindrique, qui est raccordée au fond lié au montant; et qui se prolonge par une partie de forme sensiblement tronconique, dont la petite base vient se raccorder à la contre-bride. Le fond de cette cuve est relié au montant par des éléments de fixation du type boulons. Afin d'améliorer les caractéristiques de la machine et son rendement, la cuve est recouverte d'un manteau d'isolation thermique, ce qui diminue la consommation d'énergie.

Plus précisément sur cette cuve, l'alimentation en vapeur se fait par une canalisation verticale, qui est montée et qui débouche dans la zone supérieure de la partie tronconique de la cuve; tandis que le retour de vapeur se fait par une canalisation verticale, qui est montée et qui débouche dans la zone supérieure de la partie cylindrique de la cuve, c'est-à-dire dans la zone la plus élevée de cette cuve.

Egalement sur cette cuve, la canalisation d'alimentation du fluide de nettoyage est une canalisation qui est sensiblement horizontale, et qui débouche dans la zone inférieure de la partie tronconique de la cuve; et le départ d'écoulement du fluide de nettoyage est disposé et il débouche dans la zone inférieure de la partie cylindrique de la cuve, c'est-à-dire dans la zone la plus basse de cette cuve.

Dans le système de machine intégrée selon l'invention, le dispositif d'alimentation des végétaux comporte une trémie de réception, qui est supportée par quatre vérins pneumatiques, qui sont montés d'une part sur la cuve, et d'autre part sur les deux guides supérieurs. Le dispositif d'évacuation des végétaux comporte une goulotte qui est disposée au-dessous des deux guides inférieurs, et au-dessus d'un tapis roulant. Cette goulotte et ce tapis roulant sont supportés par une structure, qui est montée sur le socle.

Dans une autre réalisation de la machine à éplucher les végétaux selon l'invention, le panier est muni d'un système de fermeture à mouvement horizontal, et il comporte un ensemble d'arbre en rotation, qui est supporté par le bâti de la machine. De plus, le chargement et le déchargement des végétaux s'effectuent par une même ouverture aménagée dans le panier; et ils sont réalisés par des moyens de commande en rotation du panier, qui se combinent avec le système de fermeture à mouvement horizontal de ce panier. La machine comporte un bâti qui est constitué d'un socle et de deux ensembles de montants verticaux, qui supportent la cuve et le panier avec son ensemble d'arbre en rotation. La cuve a un dispositif propre de fermeture. Enfin, la machine selon l'invention est munie d'un dispositif d'alimentation et d'évacuation des végétaux, de manière à ce que cette machine forme un seul et même ensemble autonome, qui est supporté par le bâti.

Avantageusement, la cuve est fixée sur l'un des deux ensembles de montant du bâti. Cette cuve a une contre-bride, qui est solidaire de cette cuve et munie d'une ouverture. Le dispositif de fermeture de la cuve est assuré par une bride, qui vient s'appuyer sur la contre-bride de la cuve, et qui est maintenu en position par l'action d'au moins un vérin hydraulique. Cette bride est immobiiisée en rotation par un système de guidage. L'ensemble d'arbre en rotation du panier est solidaire du vérin hydraulique, de manière que la contre-bride, l'ensemble d'arbre en rotation du panier, et le vérin hydraulique soient solidaires, et tenus par le système de guidage, qui est supporté par l'autre ensemble de montants. De plus, le dispositif de fermeture de la cuve comporte un système de sécurité mécanique du type autoclave, qui est constitué par la rotation d'un système de taquets agissant sur le pour tour de la bride et de la contre-bride, et qui pénètre dans une gorge de cette bride.

Selon un mode de réalisation préférentiel de l'invention, le panier est constitué par un corps sensiblement cylindrique avec un fond, et un couvercle, qui est muni d'une ouverture. Ces différents éléments ont une paroi, qui est munie de nombreux orifices, de manière à laisser passer la vapeur et le condensat, tout en retenant les végétaux. Le panier est solidaire de l'ensemble d'arbre de rotation, qui est constitué par un arbre d'entraînement, et une bride. Cet arbre d'entraînement et cette bride sont portés par deux paliers, qui sont disposés dans un carter solidaire de la bride de fermeture de la cuve. Afin d'améliorer la tenue du panier, la bride a un ou plusieurs goussets de raccordement, de tenue et de liaison avec le panier. La commande en rotation du panier est constituée par un moteur hydraulique, qui est lié à l'arbre d'entraînement, et qui est porté par le carter.

De façon préférentielle, le système de fermeture à mouvement horizontal du panier comporte un couvercle glissant, qui coulisse sur le panier par l'intermédiaire de glissières horizontales. Ces glissières horizontales appartiennent à un cadre solidaire de la bride, du panier et de l'arbre d'entraînement. Ce couvercle glissant a une forme qui est conjuguée avec celle du couvercle du panier, de manière à pouvoir recouvrir exactement ce couvercle avec son ouverture. De plus, le couvercle glissant est muni d'un cadre vertical de tenue axiale, qui est immobilisé axialement par une ou plusieurs pattes qui sont liées à la cuve. L'ensemble du panier avec son arbre d'entraînement est déplacé horizontalement par le dispositif de fermeture de la cuve, de manière à extraire en partie le panier de la cuve pour le placer en position de chargement et de déchargement. La commande en rotation de ce panier est constituée par le moteur hydraulique, qui est lié à l'arbre d'entraînement et qui est porté par le carter.

Avantageusement, la cuve est constituée par une partie de forme sensiblement cylindrique, qui est raccordée au fond sensiblement concave; et qui se prolonge par une partie en forme d'anneau sensiblement concave, qui vient se raccorder à la contre-bride. Le fond et l'anneau sont reliés et supportés par l'un des ensembles de montants. Afin d'améliorer les caractéristiques de la machine et son rendement, la cuve est recouverte d'un manteau d'isolation thermique, ce qui diminue la consommation d'énergie.

Plus précisément sur cette cuve, l'alimentation en vapeur se fait par une canalisation verticale, qui est montée et qui débouche dans la zone supérieure de la partie cylindrique de la cuve; tandis que le retour de vapeur se fait par une canalisation verticale, qui est montée et qui débouche dans la zone supérieure de la partie cylindrique de la cuve, c'est-à-dire dans la zone la plus élevée de cette cuve.

Egalement, sur cette cuve, la canalisation d'alimentation du fluide de nettoyage est une canalisation qui est sensiblement horizontale, et qui débouche dans la zone inférieure du fond de la cuve; et le départ d'écoulement du fluide de nettoyage est disposé et il débouche dans la zone inférieure de la partie cylindrique de la cuve, c'est-à-dire dans la zone la plus basse de cette cuve.

Le procédé d'épluchage des végétaux du type fruits et légumes, selon l'invention, consiste en ce que:
- le dispositif de fermeture de la cuve étant en position ouverte avec le panier en position de chargement, les végétaux descendent dans le panier par le dispositif d'alimentation c'est-à-dire par la trémie de réception en position basse donnée par les vérins pneumatiques; à la fin d'un temps prédéterminé la trémie se met en position haute et simultanément la cuve se ferme par l'intermédiaire de son dispositif de fermeture, ainsi que le panier par l'intermédiaire de son couvercle glissant;
- le panier se met en rotation par des moyens de commande en rotation et simultanément arrive la vapeur;
- après un temps prédéterminé, la phase d'injection de la vapeur est terminée, et la vidange de la vapeur est ouverte;
- lorsque la pression dans la cuve arrive à une pression basse de sécurité prédéterminée et que le panier est immobilisé en rotation et placé en position de déchargement, la cuve s'ouvre par l'intermédiaire de son dispositif de fermeture, ainsi que le panier par l'intermédiaire de son couvercle glissant;
- les végétaux sont déchargés dans le dispositif d'évacuation des végétaux;
- à la fin du déchargement, le panier tourne de 180 degrés pour se mettre en position de chargement, pendant que la trémie qui a été chargée depuis son retour en position haute, se met en position basse, le temps de chargement et la fin du cycle étant donnés par des temps prédéterminé;
- le dispositif de nettoyage fonctionnant pendant les phases de chargement et de déchargement.

La machine à éplucher les végétaux selon l'invention offre l'avantage de séparer la fonction du panier mobile dans la cuve, par rapport à la fonction de cette cuve qui elle, est immobile. De ce fait, il n'y a pas de mélange du condensat avec la charge de végétaux, et le temps d'alimentation en vapeur peut être beaucoup plus court de l'ordre de 30 secondes au lieu de 5 minutes. Ainsi, la productivité de cette machine selon l'invention peut atteindre de 5 à 6 tonnes par heure. De plus, l'opération se fait parfaitement, et il n'y a pas de pénétration de vapeur sous la peau des fruits ou des légumes. Ce gain peut atteindre 30% de réduction des pertes de produit de matière première. De plus, il n'y a pas besoin de machine de finition, puisque la machine à éplucher selon l'invention a un temps d'alimentation en vapeur qui est très efficace, c'est-à-dire qu'il n'y a pas de mélange entre les végétaux et le condensat ce qui permet un épluchage parfait par un éclatement de la peau des végétaux lors d'une phase froide, qui suit une phase chaude de vapeur très efficace. Ce temps beaucoup plus court entraîne une économie de vapeur qui peut atteindre 50% par rapport aux machines connues. La structure de la cuve qui est indépendante du panier, permet d'avoir une alimentation en vapeur qui est séparée du retour de cette vapeur. De plus, cette alimentation en vapeur qui ne dépend plus de la dimension d'un palier, peut avoir un diamètre qui correspond exactement à celui demandé. La structure de la cuve permet également d'agencer facilement dans la partie basse de celle-ci le dispositif de nettoyage par un circuit indépendant. Enfin, il est également possible de prévoir sur cette cuve fixe, un manteau d'isolation thermique, ce qui diminue les pertes d'énergie.

Le dispositif avec un axe de rotation horizontal de la machine à éplucher les végétaux selon l'invention, permet d'avoir une alimentation relativement basse des végétaux, ce qui entraîne une hauteur réduite de l'ensemble de la machine qui ne dépasse pas 1,5 mètre. Egalement, la fermeture de la cuve sur un plan vertical, permet d'avoir un système très étanche, car il s'applique sur un plan non souillé par le chargement ou le déchargement des végétaux. Enfin, le concept de cette machine à éplucher des végétaux selon l'invention, permet d'avoir un ensemble qui est monté sur un seul socle. Cet ensemble qui n'est pas d'une hauteur exagérée, peut être monté en usine, et transporté facilement pour être disposé dans le lieu d'utilisation, sans nécessiter d'opération de montage supplémentaire. Ce dernier aspect de l'invention montre l'intérêt économique de cette machine, qui s'ajoute à son coût d'utilisation, extrêmement bas par rapport aux machines connues.

D'autres avantages ressortiront de l'invention, qui sera mieux comprise à l'aide de la description donnée ci-dessous d'exemples particuliers de réalisation, décrits à titre non limitatif, en référence aux dessins annexés sur lesquels:

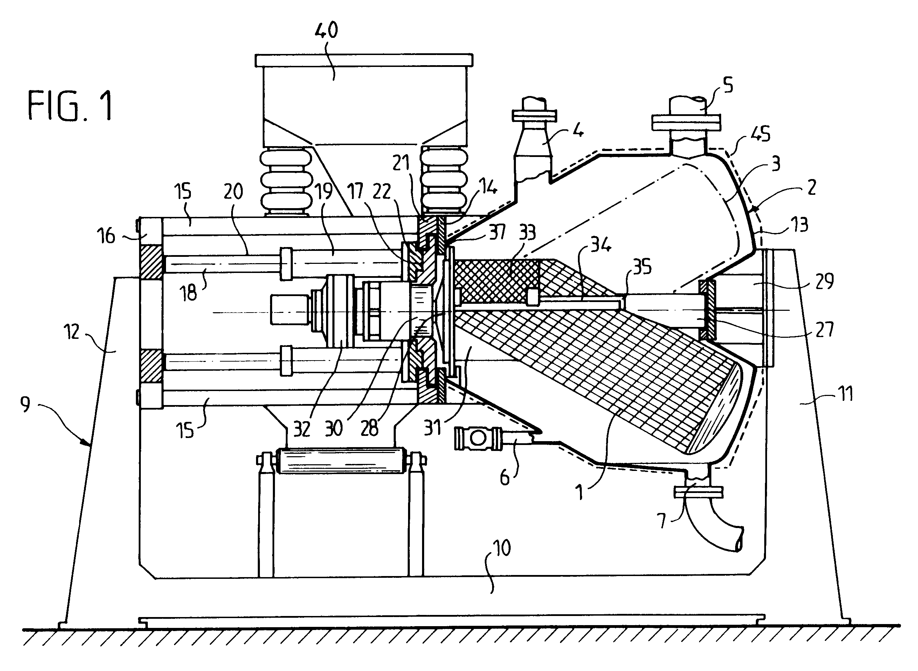

- la figure 1 est une vue de l'ensemble de la machine à éplucher les végétaux selon l'invention, par une coupe partielle suivant le plan axial vertical, le panier étant en position de rotation à l'intérieur de la cuve lors de l'alimentation en vapeur;

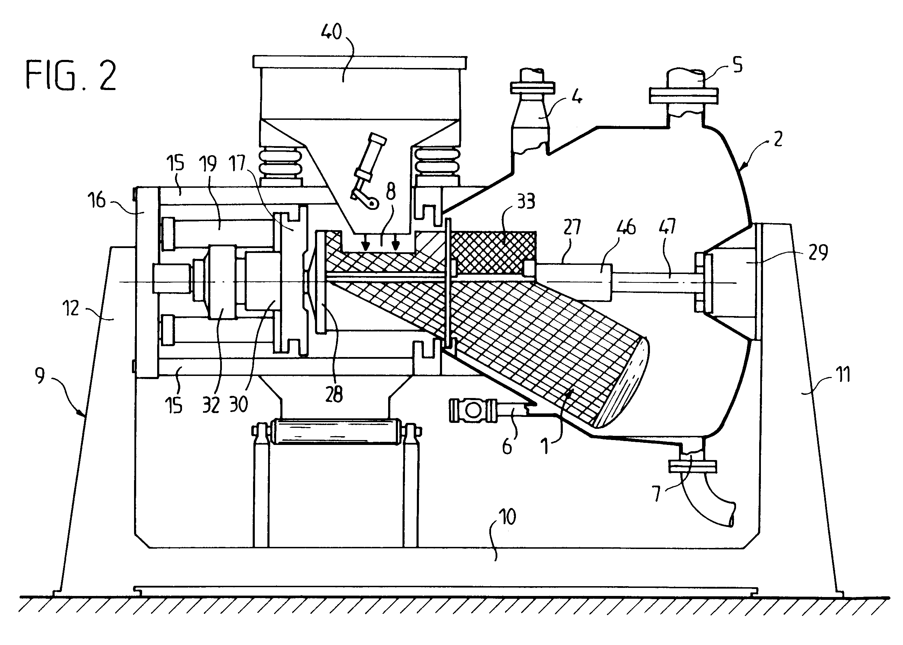

- la figure 2 est un vue identique à la figure 1 de la machine à éplucher les végétaux selon l'invention, le panier étant en position de chargement;

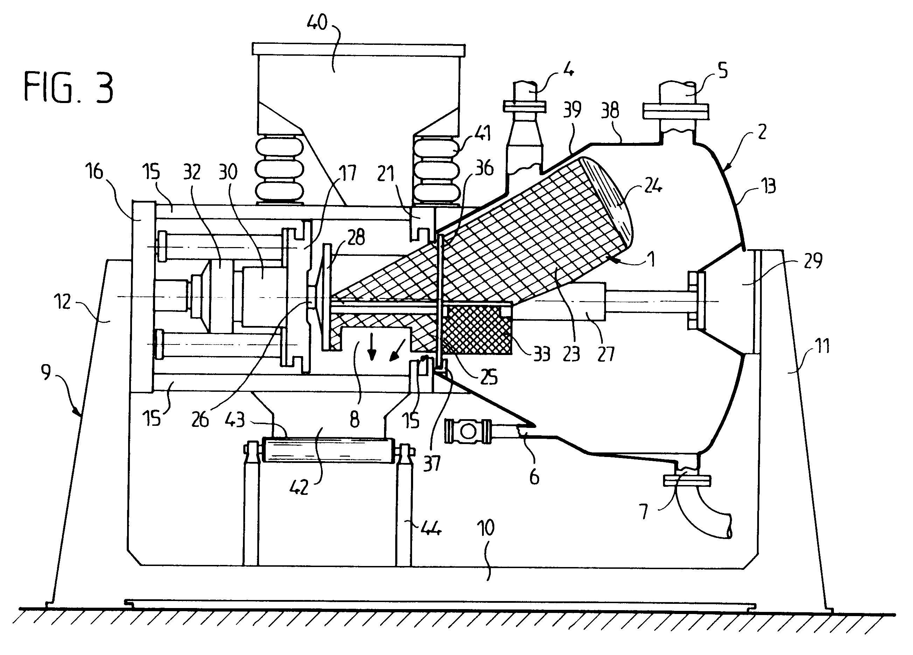

- la figure 3 est une vue analogue à la figure 2, le panier étant en position de déchargement;

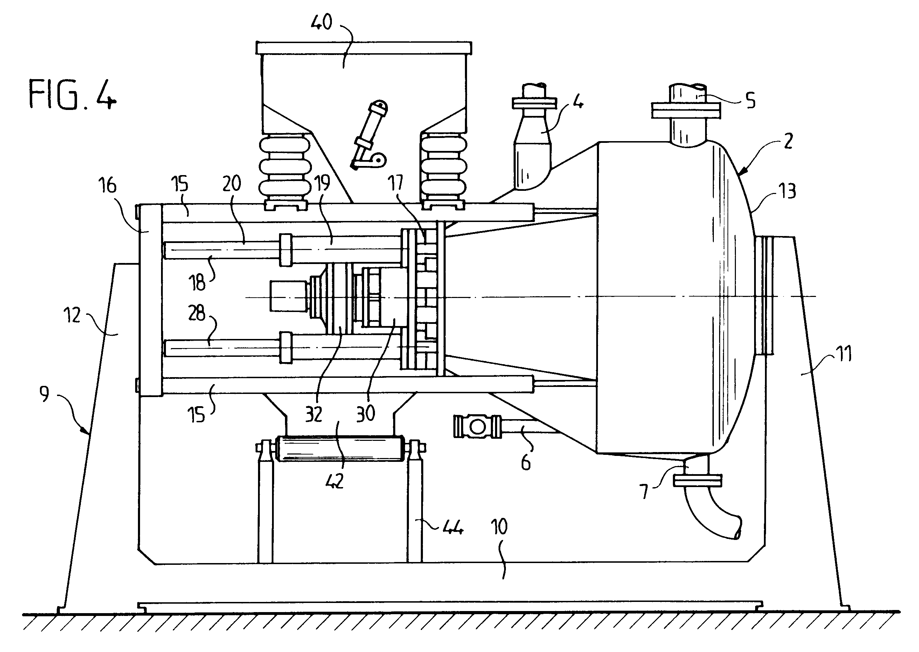

- la figure 4 est une vue extérieure de l'ensemble de la machine, la cuve étant fermée;
- la figure 5 est une vue analogue à la figure 1 d'un autre mode de réalisation de l'invention/

La machine à éplucher les végétaux qui sont plus particulièrement des fruits et des légumes, comporte un contenant qui est mobile dans une cuve 2 fixe. Ce contenant est un panier 1 qui est disposé dans la cuve 2, et qui est mobile en rotation par rapport à cette cuve 2. Un système de chargement et de déchargement alimente et récupère les végétaux du panier 1, qui coopère avec un système d'alimentation et d'évacuation en vapeur connecté avec la cuve 2, de manière que la peau puisse se détacher facilement des végétaux en mouvement, par l'action de cette vapeur. Le panier 1 est mobile en rotation dans la cuve 2, qui est disposée horizontalement dans la machine. Plus précisément, ce panier 1 est animé d'un mouvement de rotation autour de l'axe horizontal de la cuve 2; et ce panier 1 est incliné par rapport à cet axe de rotation, c'est-à-dire par rapport à l'axe horizontal de la cuve 2. La cuve 2 doit avoir des dimensions suffisantes pour pouvoir laisser se débattre librement en rotation autour de son axe horizontal l'équipage mobile du panier 1. On voit ainsi que le volume mort entre ce panier 1 et la cuve 2 est relativement important, ce qui augmente d'autant la consommation de vapeur. Pour éviter cet inconvénient, le panier 1 comporte un deuxième panier 3 qui est à paroi pleine, et avec lequel il est solidaire. Ce panier 3 est symétrique du panier 1 par rapport à l'axe de rotation, et il occupe ainsi une partie non négligeable du volume mort autour du panier 1. De plus, cet agencement permet de rééquilibrer l'ensemble de l'équipage mobile du panier 1 autour de l'axe de rotation.

Le système de circulation de vapeur dans la cuve 2 comprend une canalisation 4 d'alimentation de cette vapeur, qui débouche directement dans la cuve 2 qui est fixe, et elle comporte également une autre canalisation 5 qui est spécifique afin d'assurer le retour de la vapeur, et qui débouche directement dans cette cuve 2.

La machine selon l'invention, qui est représentée sur les figures, comporte un dispositif de nettoyage indépendant. Ce dispositif de nettoyage comprend d'une part, une canalisation d'alimentation 6 de fluide de nettoyage, qui débouche directement dans la cuve 2, et un départ d'écoulement 7, du type vidange, qui est aménagé dans la partie inférieure de cette cuve 2.

Le panier 1 est muni d'un système de fermeture à mouvement horizontal, et il comporte un ensemble d'arbres de rotation, qui sont supportés par la cuve 2. Le système de chargement et de déchargement des végétaux dans le panier 1 s'effectue par une même ouverture 8 qui est aménagée à l'une des extrémités de ce panier 1. De plus, ce système de chargement et de déchargement s'effectue par des moyens de commande en rotation du panier 1, qui se combine avec le systèmje de fermeture à mouvement horizontal de ce panier 1. Enfin, la machine selon l'invention comporte un dispositif d'alimentation et d'évacujation des végétaux, de manière que cette machine forme un seul et même ensemble autonome, qui est supporté par un bâti 9.

Le bâti 9, selon l'invention, est constitué d'un socle 10, et de deux montants verticaux référencés respectivement 11 et 12. Ces deux montants verticaux 11 et 12 supportent la cuve 2 et l'équipage mobile du panier 1, c'est-à-dire ce panier 1 avec son ensemble d'arbres en rotation.

La cuve 2 est fixée sur les deux montants 11 et 12 du bâti 9. Cette cuve 2 est constituée par une partie de forme qui est sensiblement cylindrique 38, qui est raccordée à un fond 13, et qui se prolonge de l'autre côté par une partie de forme sensiblement tronconique 39, dont la petite base vient se raccorder à une contre-bride 14. La cuve 2 est reliée au montant 11 par son fond 13, et au montant 12 par sa contre-bride 14. Le fond 13 est relié au montant 11 par des éléments de fixation qui peuvent être des boulons. De l'autre côté de la bride, la contre-bride 14 est supportée par quatre guides 15 qui sont horizontaux, et qui sont tenus à l'autre extrémité par une plaque-support 16 qui est fixée sur l'autre montant 12. La contre-bride 14 est munie d'une large ouverture cylindrique 15, qui est dimensionnée de manière à pouvoir laisser se débattre horizontalement l'équipage mobile du panier 1. Le dispositif de fermeture de la cuve 2 est assuré par une bride 17, qui vient s'appuyer sur la contre-bride 14, sous l'action d'un ensemble de vérins hydrauliques 18. Cette bride 17 est uniquement animée d'un mouvement de translation horizontal, et elle ne peut pas tourner car elle est immobilisée en rotation par la forme de son contour qui coopère avec les quatre guides 15. Plus précisément, cette bride 17 comporte à sa périphérie des logements de passage de ces quatre guides 15, qui bloquent ainsi en rotation cette bride 17. Selon l'invention, le dispositif de fermeture comporte quatre vérins hydrauliques 18; chacun de ces vérins hydrauliques 18 a un corps 19 qui est fixé sur la bride 17, et une tige 20 de piston qui est solidaire de la plaque-support 16. Afin d'améliorer encore les caractéristiques de la machine, et afin de répondre aux exigences de sécurité des services officiels de contrôle, le dispositif de fermeture de la cuve 2 comporte un système de sécurité mécanique, qui est constitué par des éléments 21 radiaux, qui pénètrent dans une gorge 22 aménagée dans la bride 17. Ces éléments 21 sont bloqués d'une manière mécanique. Afin de faciliter la réalisation de la bride 17, celle-ci peut être réalisée en deux parties qui sont assemblées avec le corps 19 des vérins 18.

La fermeture de la cuve 2 se fait ainsi suivant un plan vertical entre la bride 17 et la contre-bride 14, ce qui permet d'éviter que des végétaux aient tendance à rester sur le plan de joint, ce qui serait le cas si celui-ci était hozizontal.

Le panier 1 est constitué par un corps cylindrique 23, qui est fermé à l'une de ses extrémités par un fond 24, et qui se termine à l'autre extrémité par un couvercle 25, qui est muni de l'ouverture 8. Tous ces éléments ont une paroi qui est munie de nombreux orifices, de manière à laisser passer la vapeur et le condensat, tout en maintenant dans le panier les végétaux. Ce panier 1 est solidaire de l'ensemble d'arbres de rotation, qui est constitué d'une part, par un arbre d'entraînement 26, et d'autre part, par un arbre support 27. L'arbre d `entraînement 26 est relié à une bride 28, et l'arbre d'entraînement 26, la bride 28 et l'arbre support 27 sont solidaires les uns des autres. L'arbre support 27 est porté par un palier 29 fixé au montant 11, du côté du fond 13 de la cuve 2; tandis que l'arbre d'entraînement 26 et la bride 28 sont portés par un palier 30, qui est disposé dans la bride 17 de fermeture de la cuve 2. De plus, afin d'augmenter la rigidité de l'ensemble du panier 1, la bride 28 a un ou plusieurs goussets 31 de tenue et de liaison avec le panier 1.

Le panier 1 est animé en rotation par des moyens de commande qui sont constitués par un moteur hydraulique 32, qui est relié à l'arbre d'entraînement 26, et qui est porté par la bride 17 de fermeture de la cuve 2.

Le système de fermeture à mouvement horizontal du panier 1 comporte un couvercle glissant 33, qui coulisse sur ce panier 1 par l'intermédiaire de glissières horizontales 34. Un cadre 35 supporte ces glissières horizontales 34 et est solidaire de la bride 28 du panier 1, et de l'arbre support 27. Le couvercle glissant 33 a une forme qui est conjuguée à la forme du couvercle 25 du panier 1. Ainsi le couvercle glissant 33 vient recouvrir exactement le couvercle 25 et son ouverture 8. Le couvercle glissant 33 est également muni d'un cadre vertical 36 de tenue axiale, qui est immobilisé axialement par une ou plusieurs pattes 37 qui sont liées à la cuve 2. Ainsi, l'ensemble du panier 1 avec son équipage mobile, c'est-à-dire son arbre d'entraînement 26 et son arbre support 27 sont déplacés horizontalement par le dispositif de fermeture de la cuve 2, par l'intermédiaire de la bride 17 avec laquelle ils sont liés en translation, tandis que le couvercle glissant 33 est immobilisé axialement par rapport à la cuve 2, par le cadre vertical 36 qui coopère avec les pattes 37.

Ce déplacement horizontal permet d'extraire en partie le panier 1 de la cuve 2, de manière à placer le panier 1 en position de chargement ou de déchargement.

Le dispositif de circulation de vapeur se fait par la canalisation 4 d'alimentation qui est verticale, qui est montée et qui débouche dans la zone supérieure de la aprtie tronconique 39 de la cuve 2. La canalisation 5 de retour de vapeur est également verticale, elle est montée et elle débouche dans la zone supérieure de la partie cylindrique 38 de la cuve 2, c'est-à-dire qu'elle est disposée dans la zone la plus élevée de cette cuve 2. De plus, chacune de ces canalisations 4 et 5 ont l'une et l'autre leurs organes de contrôle de débit.

Le dispositif de nettoyage a la canalisation d'alimentation 6 du fluide de nettoyage qui est une canalisation sensiblement horizontale, et qui débouche dans la zone inférieure de la partie tronconique 39 de la cuve 2. Le départ d'écoulement 7 du fluide de nettoyage est disposé et débouche dans la zone inférieure de la partie cylindrique 38 de la cuve 2, c'est-à-dire dans la zone la plus basse de cette cuve 2. Cette canalisation 6, et ce départ d'écoulement 7 sont munis des différents organes de contrôle de débit et de pompage nécessités par le nettoyage de la cuve 2.

Le dispositif d'alimentation des végétaux qui est monté directement sur la machine selon l'invention, comporte essentiellement une trémie 40 de réception, qui est supportée par quatre vérins pneumatiques 41, qui sont montés d'une part sur la cuve 2 pour deux d'entre eux, et d'autre part, sur les deux guides 15 supérieurs pour les deux autres. Le dispositif d'évacuation des végétaux qui est également intégré dans la machine selon l'invention, comporte une goulotte 42, qui est disposée au-dessous des deux guides 15 inférieurs, et au-dessus d'un tapis roulant 43. Cette goulotte 42 et ce tapis roulant 43 sont supportés par une structure 44 qui est montée sur le socle 10 de la machine.

Afin d'améliorer les caractéristiques d'isolation thermique de la machine selon l'invention, la cuve 2 est recouverte d'un manteau 45 d'isolation thermique.

L'équipage mobile du panier 1, a son arbre support 27 qui comporte un logement 46. Ce logement 46 vient se monter dans un embout cylindrique 47 qui est solidaire du palier 29. Dans une autre variante de réalisation de l'invention, qui n'est pas représentée sur les figures, l'arbre support 27 pénètre directement dans le palier 29 qui le supporte.

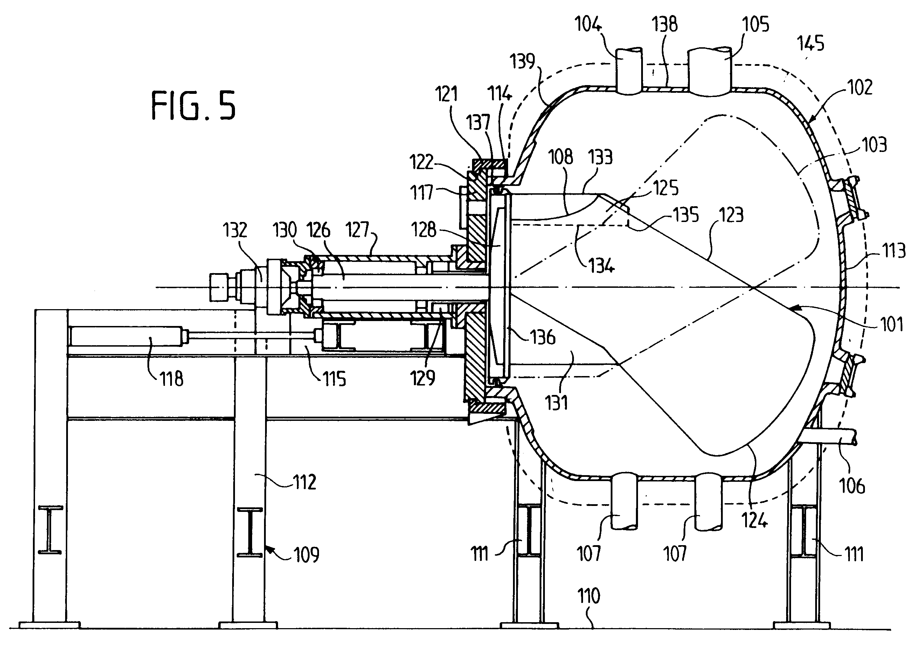

Dans un deuxième mode de réalisation de l'invention représenté sur la figure 5, la machine à éplucher les végétaux, qui s'occupe particulièrement des fruits et des légumes, comporte un contenant qui est mobile dans une cuve 102 fixe. Ce contenant est un panier 101 qui est disposé dans la cuve 102, et qui est mobile en rotation par rapport à cette cuve 102. Un système de chargement et de déchargement alimente et récupère les végétaux du panier 101, qui coopère avec un système d'alimentation et d'évacuation en vapeur connecté avec la cuve 102, de manière que la peau puisse se détacher facilement des végétaux en mouvement, par l'action de cette vapeur. Le panier 101 est mobile en rotation dans la cuve 102, qui est disposé horizontalement dans la machine. Plus précisément, ce panier 101 est animé d'un mouvement de rotation autour de l'axe horizontal de la cuve 102; et ce panier 101 est incliné par rapport à cet axe de rotation, c'est-à-dire par rapport à l'axe horizontal de la cuve 102. La cuve 102 doit avoir des dimensions suffisantes pour pouvoir laisser se débattre librement en rotation autour de son axe horizontal, l'équipage mobile du panier 101. On voit ainsi que le volume mort entre ce panier 101 et la cuve 102 est relativement important, ce qui augmente d'autant la consommation de vapeur. Pour éviter cet inconvénient, le panier 101 comporte un deuxième panier 103 qui est à paroi pleine, et avec lequel il est solidaire. Ce panier 103 est symétrique du panier 101 par rapport à l'axe de rotation, et il occupe ainsi une partie non négligeable du volume mort autour du panier 101. De plus, cet agencement permet de rééquilibrer l'ensemble de l'équipage mobile du panier 101 autour de l'axe de rotation.

Le système de circulation de vapeur dans la cuve 102 comprend une canalisation 104 d'alimentation de cette vapeur, qui débouche directement dans la cuve 102 qui est fixe, et elle comporte également une autre canalisation 105 qui est spécifique afin d'assurer le retour de la vapeur, et qui débouche directement dans cette cuve 102.

La machine selon l'invention, qui est représentée sur la figure 5, comporte un dispositif de nettoyage indépendant. Ce dispositif de nettoyage comprend d'une part, une canalisation d'alimentation 106 de fluide de nettoyage, qui débouche directement dans la cuve 102, et un départ d'écoulement 107, du type vidange, qui est aménagé dans la partie inférieure de cette cuve 102.

Le panier 101 est muni d'un système de fermeture à mouvement horizontal, et il comporte un ensemble d'arbre de rotation, qui est supporté par le bâti de la machine. Le système de chargement et de déchargement des végétaux dans le panier 101 s'effectue par une même ouverture 108, qui est aménagée à l'une des extrémités de ce panier 101. De plus, ce système de chargement et de déchargement s'effectue par des moyens de commande en rotation du panier 101, qui se combine avec le système de fermeture à mouvement horizontal de ce panier 101. Enfin, la machine comporte un dispositif d'alimentation et d'évacuation des végétaux, de manière que cette machine forme un seul et même ensemble autonome, qui est supporté par un bâti 109.

Le bâti 109, selon l'invention, est constitué d'un socle 110, et de deux ensembles de montants verticaux qui sont respectivement référencés dans leurs ensembles 111 et 112. L'ensemble de montants verticaux 111 supporte la cuve 102, tandis que l'équipage mobile du panier 101 est supporté par l'ensemble des montants verticaux 112.

La cuve 102 est fixée sur l'ensemble des montants verticaux 111 du bâti 109. Cette cuve 102 est constituée par une partie de forme sensiblement cylindrique 138, qui est raccordée à un fond sensiblement concave 113, et qui se prolonge de l'autre côté par une partie en forme d'anneau sensiblement concave 139, qui vient se raccorder à une contre-bride 114. Le fond 113, et l'anneau 139 sont reliés et supportés par l'ensemble de montants 111. La contre-bride 114 est munie d'une large ouverture cylindrique 115, qui est dimensionnée de manière à pouvoir laisser se débattre horizontalement l'équipage mobile du panier 101. Le dispositif de fermeture de la cuve 102 est assuré par une bride 117, qui vient s'appuyer sur la contre-bride 114, sous l'action d'au moins un vérin hydraulique 118. Cette bride 117 est uniquement animée d'un mouvement de translation horizontal et elle ne peut pas tourner car elle est liée à un système de guidage 115. L'ensemble d'arbre en rotation référencé 126 du panier 101 est solidaire de ce vérin hydraulique 118. Ainsi, la contre-bride 114, l'ensemble d'arbre en rotation 126 du panier 101, et le vérin hydraulique 118 sont solidaires et son tenus par le système de guidage 115, qui est lui-même supporté par l'autre ensemble de montants 112.

Afin d'améliorer encore les caractéristiques de la machine, et afin de répondre aux exigences de sécurité des Services Officiels de Contrôle, le dispositif de fermeture de la cuve 102 comporte un système de sécurité mécanique du type autoclave, qui est constitué par la rotation d'un système de taquets 121. Ces taquets 121 agissent sur le pourtour de la bride 117, et de la contre-bride 114, et il pénètre dans une gorge 122 de cette bride 117. La fermeture de la cuve 102 se fait ainsi suivant un plan vertical entre la bride 117 et la contre-bride 114, ce qui permet d'éviter que des végétaux aient tendance à rester sur le plan de joint, ce qui serait le cas si celui-ci était horizontal.

Le panier 101 est constitué par un corps sensiblement cylindrique 123, qui est fermé à l'une de ses extrémités par un fond 124, et qui se termine à l'autre extrémité par un couvercle 125, qui est muni de l'ouverture 108. Tous ces éléments ont une paroi qui est munie de nombreux orifices de manière à laisser passer la vapeur et le condensat, tout en maintenant dans le panier les végétaux. Ce panier 101 est solidaire de l'ensemble d'arbre de rotation, qui est constitué par un arbre d'entraînement 126. L'arbre d'entraînement 126 est relié à une bride 128, l'arbre d'entraînement 126 et la bride 128 sont ainsi solidaires et ils sont portés par deux paliers 129 et 130 qui sont disposés dans un carter 127. Ce carter 127 est solidaire de la bride 117 de fermeture de la cuve 102. De plus, afin d'augmenter la rigidité de l'ensemble du panier 101, la bride 128 a un ou plusieurs goussets 131 de tenue et de liaison avec le panier 101.

Le panier 101 est animé en rotation par des moyens de commande qui sont constitués par un moteur hydraulique 132, qui est relié à l'arbre d'entraînement 126, et qui est porté par le carter 127.

Le système de fermeture a un mouvement horizontal du panier 101 comporte un couvercle glissant 133, qui coulisse sur ce panier 101 par l'intermédiaire de glissière horizontale 134. Un cadre 135 supporte ces glissières horizontales 134, et est solidaire de la bride 128 du panier 101, et de l'arbre d'entraînement 126. Le couvercle glissant 133 a une forme qui est conjuguée à la forme du couvercle 125 du panier 101. Ainsi, le couvercle glissant 133 vient recouvrir exactement le couvercle 125 et son ouverture 108. Le couvercle glissant 133 est également muni d'un cadre vertical 136 de tenue axiale, qui est immobilisé axialement par une ou plusieurs pattes 137 qui sont liées à la cuve 102. Ainsi, l'ensemble du panier 101 avec son équipage mobile, c'est-à-dire son arbre d'entraînement 126 et la bride 128 sont déplacés horizontalement par le dispositif de fermeture de la cuve 102, par l'intermédiaire de la bride 117 avec laquelle ils sont liés en translation, tandis que le couvercle glissant 133 est immobilisé axialement par rapport à la cuve 102, dans le cadre vertical 136 qui coopère avec les pattes 137.

Le dispositif de circulation de vapeur se fait par la canalisation 104 d'alimentation qui est verticale, qui est montée et qui débouche dans la zone supérieure de la partie cylindrique 138 de la cuve 102. La canalisation 105 de retour de vapeur est également verticale, elle est montée et elle débouche dans la zone supérieure de la partie cylindrique 138 de la cuve 102, c'est-à-dire qu'elle est disposée dans la zone la plus élevée de cette cuve 102. De plus, chacune de ces canalisations 104 et 105 ont l'une et l'autre leurs organes de contrôle de débit.

Le dispositif de nettoyage a la canalisation d'alimentation 106 de fluide de nettoyage qui est une canalisation sensiblement horizontale, et qui débouche dans la zone inférieure du fond 139 de la cuve 102. Le départ d'écoulement 107 du fluide de nettoyage est disposé et débouche dans la zone inférieure de la partie cylindrique 138 de la cuve 102, c'est-à-dire dans la zone la plus basse de cette cuve 102. Cette canalisation 106 et ce départ d'écoulement 107 sont munis des différents organes de contrôle de débit et de pompage nécessités par le nettoyage de la cuve 102.

Afin d'améliorer les caractéristiques d'isolation thermique de la machine selon l'invention, la cuve 102 est recouverte d'un manteau 145 d'isolation thermique.

Le procédé d'épluchage des végétaux du type fruits et légumes qui utilise la machine selon l'invention décrite ci-dessus, se déroule suivant les étapes ci-après:
- dans une première étape, le dispositif de fermeture de la cuve 2 étant en position ouverte avec le panier 1 en position de chargement, les végétaux descendent dans le panier 1 par le dispositif d'alimentation, c'est-à-dire par la trémie 40 de réception en position basse donnée par les vérins pneumatiques 41. A la fin d'un temps prédéterminé, la trémie 40 se met en position haute, et simultanément la cuve 2 se ferme par l'intermédiaire de son dispositif de fermeture, tandis que dans le même temps le panier 1 se ferme également par l'intermédiaire de son couvercle glissant 33;
- dans une deuxième étape, le panier 1 se met en rotation par des moyens de commande en rotation c'est-à-dire par le moteur hydraulique 32, et simultanément arrive la vapeur;
- dans une troisième étape, et après un temps prédéterminé, la phase d'injection de la vapeur est terminée, et la vidange de la vapeur est ouverte;
- dans une quatrième étape, lorsque la pression dans la cuve 2 arrive à une pression basse de sécurité prédéterminée, et que le panier 1 est immobilisé en rotation et placé en position de déchargement, c'est-à-dire en position verticale haute; la cuve 2 s'ouvre par l'intermédiaire de son dispositif de fermeture. Egalement le panier 1 s'ouvre par l'intermédiaire de son couvercle glissant 33;
- dans une cinquième étape, les végétaux sont déchargés dans le dispositif d'évacuation de ces végétaux;
- dans une sixième étape, c'est-à-dire à la fin du déchargement, le panier 1 tourne de 180 degrés pour se mettre en position de chargement. Pendant ce temps-là, la trémie 40, qui a été chargée depuis son retour en position haute, se met en position basse. Le temps de déchargement et la fin du cycle sont donnés par des temps prédéterminés.

Le dispositif de nettoyage fonctionne pendant les phases de chargement et de déchargement.

## Revendications

1. Machine à éplucher les végétaux du type fruits et légumes comportant un contenant avec un système de chargement et de déchargement, et un système d'alimentation et d'évacuation en vapeur, le contenant étant un panier (1, 101) qui est disposé dans une cuve (2, 102) fixe, dans laquelle ledit panier (1, 101) est animé d'un mouvement de rotation autour de l'axe horizontal de la cuve (2, 102),
caractérisée en ce que le panier (1, 101) est incliné par rapport à l'axe de rotation, c'est-à-dire par rapport à l'axe horizontal de la cuve (2, 102).

2. Machine selon la revendication 1, caractérisée en ce que le panier (1, 101) comporte un deuxième panier (3, 103) à paroi pleine, avec lequel il est solidaire, et qui est symétrique audit panier (1, 101) par rapport à l'axe de rotation, de manière à diminuer le volume mort de la cuve (2, 102) entourant le panier (1, 101) en rotation dans cette cuve (2, 102).

3. Machine selon la revendication 1, caractérisée en ce que l'alimentation en vapeur se fait par une canalisation (4, 104) débouchant directement dans la cuve (2, 102) fixe.

4. Machine selon la revendication 3, caractérisée en ce que le retour de vapeur se fait dans une canalisation (5, 105) spécifique débouchant directement dans la cuve (2, 102) fixe.

5. Machine selon la revendication 1, caractérisée en ce que l'enceinte comporte un dispositif de nettoyage indépendant.

6. Machine selon la revendication 5, caractérisée en ce que le dispositif de nettoyage comporte une canalisation d'alimentation (6, 106) de fluide de nettoyage débouchant dans la cuve (2, 102).

7. Machine selon la revendication 5, caractérisée en ce que le dispositif de nettoyage comporte au moins un départ d'écoulement (7, 107), du type vidange, aménagé dans la partie inférieure de la cuve (2, 102).

8. Machine selon la revendication 1, caractérisée en ce que le panier (1, 101) est muni d'un système de fermeture à mouvement horizontal.

9. Machine selon la revendication 1, caractérisée en ce que le système de chargement et de déchargement des végétaux s'effectuent par la même ouverture (8, 108) du panier (1, 101).

10. Machine selon les revendications 8 et 9, caractérisée en ce que le chargement et le déchargement s'effectuent par des moyens de commande en rotation du panier (1, 101) qui se combinent avec le système de fermeture à mouvement horizontal du panier (1, 101).

11. Machine selon la revendication 1, caractérisée en ce que le panier (1) comporte un ensemble d'arbres de rotation (26, 27) qui est supporté par la cuve (2).

12. Machine selon l'une des revendications précédentes, caractérisée en ce qu'elle comporte un bâti (9) constitué d'un socle (10) et de deux montants (11) et (12) verticaux, qui supportent la cuve (2) et le panier (1) avec son ensemble d'arbres (26, 27) en rotation, la cuve (2) ayant un dispositif de fermeture.

13. Machine selon la revendication 12, caractérisée en ce qu'elle comporte un dispositif d'alimentation et d'évacuation des végétaux, de manière à ce que la machine forme un seul ensemble autonome supporté par le bâti (9).

14. Machine selon l'une des revendications 12 et 13, caractérisée en ce que la cuve (2) est fixée sur les deux montants (11) et (12) du bâti d'un côté par son fond (13) à l'un des montants (11), et l'autre côté par une contre-bride (14) solidaire de la cuve (2) et munie d'une ouverture (15), ladite contre-bride (14) étant supportée par quatre guides (15) tenus par une plaque-support (16) fixée sur l'autre montant (12), le dispositif de fermeture de cuve (2) étant assuré par une bride (17) qui vient s'appuyer sur la contre-bride (14) sous l'action d'au moins un vérin hydraulique (18) et qui est immobilisé en rotation par les quatre guides (15).

15. Machine selon la revendication 14, caractérisée en ce que le dispositif de fermeture de la cuve (2) comporte quatre vérins hydrauliques (18), dont le corps (19) est fixé sur la bride (17) et dont la tige (20) est solidaire de la plaque-support (16).

16. Machine selon la revendication 15, caractérisée en ce que le dispositif de fermeture de la cuve (2) comporte un système de sécurité mécanique constitué par des éléments (21) qui pénètrent dans une gorge (22) de la bride (17).

17. Machine selon la revendication 14, caractérisée en ce que le panier (1) est constitué par un corps cylindrique (23) avec un fond (24) et un couvercle (25) muni d'une ouverture (8), qui ont une paroi munie de nombreux orifices de manière à laisser passer la vapeur et le condensat tout en retenant les végétaux ; ce panier (1) étant solidaire de l'ensemble d'arbres de rotation constitué par un arbre d'entraînement (26), une bride (28) et par un arbre support (27) qui sont solidaires ; l'arbre support (27) étant porté par un palier (29) fixé au montant (11) du côté du fond (13) de la cuve (2), tandis que l'arbre d'entraînement (26) et la bride (28) sont portés par un palier (30) disposé dans la bride (17) de fermeture de la cuve (2) ; la bride (28) ayant un ou des goussets (31) de tenue et de liaison avec le panier (1).

18. Machine selon la revendication 17, caractérisée en ce que les moyens de commande en rotation du panier (1) sont constitués par un moteur hydraulique (32) lié à l'arbre d'entraînement (26) et porté par la bride (17) de fermeture de la cuve (2).

19. Machine selon la revendication 17, caractérisée en ce que le système de fermeture à mouvement horizontal du panier (1) comporte un couvercle glissant (33), qui coulisse sur le panier (1) par l'intermédiaire de glissières horizontales (34) appartenant à un cadre solidaire (35) de la bride (28), du panier (1) et de l'arbre support (27), ce couvercle glissant (33) ayant une forme conjuguée au couvercle (25) du panier (1) de manière à pouvoir recouvrir exactement ledit couvercle (25) avec son ouverture (8) ; le couvercle glissant (33) étant muni d'un cadre vertical (36) de tenue axiale immobilisé axialement par une ou des pattes (37) liées à la cuve (2) ; l'ensemble du panier (1) avec son arbre d'entraînement (26) et son arbre support (27) étant déplacés horizontalement par le dispositif de fermeture de la cuve (2), de manière à extraire en partie le panier (1) de la cuve (2) pour le placer en position de chargement ou de déchargement.

20. Machine selon l'une des revendications 12 et 13, caractérisée en ce que la cuve (2) est constituée par une partie de forme sensiblement cylindrique (38) raccordée au fond (13) lie au montant (11), et qui se prolonge par une partie de forme sensiblement tronconique (39) dont la petite base vient se raccorder à la contre-bride (14) ; le fond (13) étant relié au montant (11) par des éléments de fixation du type boulon.

21. Machine selon la revendication 20, caractérisée en ce que l'alimentation en vapeur se fait par une canalisation (4) verticale qui est montée et qui débouche dans la zone supérieure de la partie tronconique (39) de la cuve (2).

22. Machine selon la revendication 21, caractérisée en ce que le retour de vapeur se fait par une canalisation (5) verticale qui est montée et qui débouche dans la zone supérieure de la partie cylindrique (38) de la cuve (2), c'est-à-dire dans la zone la plus élevée de cette cuve (2).

23. Machine selon la revendication 20, caractérisée en ce que la canalisation d'alimentation (6) du fluide de nettoyage est une canalisation sensiblement horizontale, qui débouche dans la zone inférieure de la partie tronconique (39) de la cuve (2).

24. Machine selon la revendication 20, caractérisée en ce que le départ d'écoulement (7) du fluide de nettoyage est disposé et débouche dans la zone inférieure de la partie cylindrique (38) de la cuve (2), c'est-à-dire dans la zone la plus basse de cette cuve (2).

25. Machine selon la revendication 14, caractérisée en ce que le dispositif d'alimentation des végétaux comporte une trémie (40) de réception supportée par quatre vérins pneumatiques (41) montés d'une part sur la cuve (2), et d'autre part sur les deux guides (15) supérieurs.

26. Machine selon la revendication 14, caractérisée en ce que le dispositif d'évacuation des végétaux comporte une goulotte (42) disposée au-dessous des deux guides (15) inférieurs, et au-dessus d'un tapis roulant (43) ; cette goulotte (42) et ce tapis roulant (43) étant supportés par une structure (44) montée sur le socle (10).

27. Machine selon la revendication 20, caractérisée en ce que la cuve (2) est recouverte d'un manteau (45) d'isolation thermique.

28. Machine selon la revendication 17, caractérisée en ce que l'arbre support (27) pénètre dans le palier (29) qui le supporte directement.

29. Machine selon la revendication 17, caractérisée en ce que l'arbre support (27) comporte un logement (46) qui vient se monter sur un embout cylindrique (47) solidaire du palier (29).

30. Machine selon la revendication 1, caractérisée en ce que le panier (101) comporte un ensemble d'arbre en rotation (126) qui est supporté par le bâti (109) de la machine.

31. Machine selon l'une des revendications 1 à 10, caractérisée en ce qu'elle comporte un bâti (109) constitué d'un socle (110) et de deux ensembles de montants (111) et (112) verticaux qui supportent la cuve (102) et le panier (101) avec son ensemble d'arbre en rotation (126), la cuve (102) ayant son dispositif de fermeture.

32. Machine selon la revendication 31, caractérisée en ce qu'elle comporte un dispositif d'alimentation et d'évacuation des végétaux, de manière à ce que la machine forme un seul ensemble autonome supporté par le bâti (109).

33. Machine selon l'une des revendications 31 et 32, caractérisée en ce que la cuve (102) est fixée sur l'un des deux ensembles de montants (111) du bâti (109), ladite cuve (102) ayant une contre-bride (114) solidaire de la cuve (102) et munie d'une ouverture (115), le dispositif de fermeture de la cuve (102) étant assuré par une bride (117) qui vient s'appuyer sur la contre-bride (114) sous l'action d'au moins un vérin hydraulique (118), et qui est immobilisée en rotation par un système de guidage (115), l'ensemble d'arbre en rotation (126) du panier (101) étant solidaire dudit vérin hydraulique (118) de manière que la contre-bride (114), l'ensemble d'arbre en rotation (126), du panier (101), le vérin hydraulique (118) soient solidaires et tenus par le système de guidage (115) qui est supporté par l'autre ensemble de montants (112).

34. Machine selon la revendication 33, caractérisée en ce que le dispositif de fermeture de la cuve (102) comporte un système de sécurité mécanique du type autoclave constitué par la rotation d'un système de taquets (121) agissant sur le pourtour de la bride (117) et de la contre-bride (114) et qui pénètrent dans une gorge (122) de la bride (117).

35. Machine selon la revendication 33, caractérisée en ce que le panier (101) est constitué par un corps sensiblement cylindrique (123) avec un fond (124) et un couvercle (125) muni d'une ouverture (108), qui ont une paroi munie de nombreux orifices de manière à laisser passer la vapeur et le condensat tout en retenant les végétaux ; ce panier (101) étant solidaire de l'ensemble d'arbre de rotation constitué par un arbre d'entraînement (126) et une bride (128), l'arbre d'entraînement (126) et la bride (128) sont portés par deux paliers (129 et 130) disposés dans un carter (127) solidaire de la bride (117) de fermeture de la cuve (102) ; la bride (128) ayant un ou des goussets (131) de tenue et de liaison avec le panier (101).

36. Machine selon la revendication 35, caractérisée en ce que les moyens de commande en rotation du panier (101) sont constitués par un moteur hydraulique (132) lié à l'arbre d'entraînement (126) et porté par le carter (127).

37. Machine selon la revendication 35, caractérisée en ce que le système de fermeture à mouvement horizontal du panier (101) comporte un couvercle glissant (133), qui coulisse sur le panier (101) par l'intermédiaire de glissières horizontales (134) appartenant à un cadre solidaire (135) de la bride (128) du panier (101) et de l'arbre d'entraînement (126), ce couvercle glissant (133) ayant une forme conjuguée au couvercle (125) du panier (101) de manière à pouvoir recouvrir exactement ledit couvercle (125) avec son ouverture (108) ; le couvercle glissant (133) étant muni d'un cadre vertical (136) de tenue axiale immobilisé axialement par une ou des pattes (137) liées à la cuve (102) ; l'ensemble du panier (101) avec son arbre d'entraînement (126) étant déplacés horizontalement par le dispositif de fermeture de la cuve (102) ; de manière à extraire en partie le panier (101) de la cuve (102) pour le placer en position de chargement et de déchargement.

38. Machine selon l'une des revendications 31 et 32, caractérisée en ce que la cuve (102) est constituée par une partie de forme sensiblement cylindrique (138) raccordée au fond (113) sensiblement concave, lié au montant (111), et qui se prolonge par une partie en forme d'anneau sensiblement concave (139) qui vient se raccorder à la contre-bride (114); le fond (113) et l'anneau (139) étant reliés à l'ensemble de montants (111).

39. Machine selon la revendication 38, caractérisée en ce que l'alimentation en vapeur se fait par une canalisation (104) verticale qui est montée et qui débouche dans la zone supérieure de la partie cylindrique (138) de la cuve (102).

40. Machine selon la revendication 39, caractérisée en ce que le retour de vapeur se fait par une canalisation (105) verticale qui est montée et qui débouche dans la zone supérieure de la partie cylindrique (138) de la cuve (102), c'est-à-dire dans la zone la plus élevée de cette cuve (102).

41. Machine selon la revendication 38, caractérisée en ce que la canalisation d'alimentation (106) du fluide de nettoyage est une canalisation sensiblement horizontale, qui débouche dans la zone inférieure du fond (139) de la cuve (102).

42. Machine selon la revendication 38, caractérisée en ce que le/les départ(s) d'écoulement (107) du fluide de nettoyage est/sont disposé(s) et débouche(nt) dans la zone inférieure de la partie cylindrique (138) de la cuve (102), c'est-à-dire dans la zone la plus basse de cette cuve (102).

43. Machine selon la revendication 38, caractérisée en ce que la cuve (102) est recouverte d'un manteau (145) d'isolation thermique.

44. Procédé d'épluchage de végétaux du type fruits et légumes, caractérisé en ce que dans une cuve d'épluchage avec panier :
- le dispositif de fermeture de la cuve (2) étant en position ouverte avec le panier (1) en position de chargement, les végétaux descendent dans le panier (1) par un dispositif d'alimentation, c'est-à-dire par une trémie (40) de réception en position basse donnée par vérins pneumatiques (41), à la fin d'un temps prédéterminé la trémie (40) se met en position haute et simultanément la cuve (2) se ferme par l'intermédiaire de son dispositif de fermeture ainsi que le panier (1) par l'intermédiaire d'un couvercle glissant (33) ;
- le panier (1) se met en rotation par des moyens de commande en rotation et simultanément arrive la vapeur ;
- après un temps prédéterminé, la phase d'injection de la vapeur est terminée, et la vidange de la vapeur est ouverte ;
- lorsque la pression dans la cuve (2) arrive à une pression basse de sécurité prédéterminée et que le panier (1) est immobilisé en rotation et placé en position de déchargement, la cuve (2) s'ouvre par l'intermédiaire de son dispositif de fermeture ainsi que le panier (1) par l'intermédiaire de son couvercle glissant (33) ;
- les végétaux sont déchargés dans un dispositif d'évacuation des végétaux ;
- à la fin du déchargement, le panier (1) tourne de 180 degrés pour se mettre en position de chargement, pendant que la trémie (40), qui a été chargée depuis son retour en position haute, se met en position basse, le temps de déchargement et la fin du cycle étant donnés par des temps prédéterminés ;
- le dispositif de nettoyage fonctionnant pendant les phases de chargement et de déchargement.

## Claims

1. Machine for peeling vegetable materials such as fruits and vegetables, comprising a container with a loading and unloading system and a steam feeding and releasing system, said container being a basket (1,101) which is provided into a fixed tank (2,102) in which said basket (1,101) is propelled with a rotation movement around the horizontal axis of the tank (2,102). characterized in that the basket (1,101) is slanted with respect to the rotation axis, i.e. with respect to the horizontal axis of the tank (2,102).

2. Machine according to claim 1, characterized in that the basket (1,101) comprises a second basket (3,103) with full wall integral with it and which is symetrical to said basket (1,101) with respect to the rotation axis in order to reduce the neutral volume of the tank (2,102) surrounding the rotation basket (1,101) in said tank (2,102).

3. Machine according to claim 1, characterized in that the steam feeding is provided for by a duct (4,104) opening directly into the fixed tank (2,102).

4. Machine according to claim 3, characterized in that the steam returning is provided for by a specific duct (5,105) opening directly into the fixed tank (2,102).

5. Machine according to claim 1, characterized in that the enclosure comprises an independent cleaning device.

6. Machine according to claim 5, characterized in that the cleaning device comprises a cleaning fluid feeding duct (6,106) opening into the tank (2,102).

7. Machine according to claim 5, characterized in that the cleaning device comprises at least a flow device (7,107) of the draining type provided in the lower part of the tank (2,102).

8. Machine according to claim 1, characterized in that the basket (1,101) is provided with a closing system having a horizontal movement.

9. Machine according to claim 1, characterized in that the vegetable loading and unloading are performed through same opening (8,108) of the basket (1,101).

10. Machine according to claims 8 and 9, characterized in that the loading and unloading are provided for by rotation control means of the basket (1,101) which act with the closing system with an horizontal movement of the basket (1,101).

11. Machine according to claim 1, characterized in that the basket (1) comprises a rotation shaft assembly (26,27) which is held by the tank (2).

12. Machine according to any one of the preceeding claims, characterized in that it comprises a frame (9) having a base (10) and two vertical uprights (11) and (12) holding the tank (2) and the basket (1) with the rotation shaft assembly (26,27) thereof, the tank (2) having a closing device.

13. Machine according to claim 12, characterized in that it comprises a vegetable feeding and releasing device in order that the machine comprises one autonomous assembly only held by the frame (9).

14. Machine according to one of claims 12 and 13, characterized in that the tank (2) is fixed to the two uprights (11) and (12) of the frame on one side by the bottom (13) thereof to one of the uprights (11) and on the other side by a counter flange (14) integral with the tank (2) and provided with an opening (15), said counter flange (14) being held by four guides (15) held by a support plate (16) fixed on the other upright (12), the closing device of the tank (2) being provided by a flange (17) which rests on the counter flange (14) under the action of at least an hydraulic jack (18) and which is immobilized in rotation by the four guides (15).

15. Machine according to claim 14, characterized in that the closing device of the tank (2) comprises four hydraulic jacks (18), the body of which is fixed on the flange (17) and the rod (20) of which is integral with the support plate (16).

16. Machine according to claim 15, characterized in that the closing device of the tank (2) comprises a mechanical safety system having elements (21) penetrating into a groove (22) of the flange (17).

17. Machine according to claim 14, characterized in that the basket (1) comprises a cylindrical body (23) with a bottom (24) and a lid (25) provided with an opening (8), which have a wall provided with a plurality of holes in order to allow the steam and condensat passage while retaining the vegetables; said basket (1) being integral with the rotation shaft assembly comprising a driving shaft (26), a flange (28) and a support shaft (27) which are integral; the support shaft (27) being held by a bearing (29) fixed to the upright (11) on the side of the bottom (13) of the tank (2), while the driving shaft (26) and the flange (28) are held by a bearing (30) provided in the closing flange (17) of the tank (2); the flange (28) having one or many holding and linking gussets (31) with the basket (1).

18. Machine according to claim 17, characterized in that the rotation control means of the basket (1) comprise a hydraulic motor (32) linked to the driving shaft (26) and held by the closing flange (17) of the tank (2).

19. Machine according to claim 17, characterized in that the closing system with a horizontal movement of the basket (1) comprises a sliding lid (33) which slides on the basket (1) by means of horizontal slides (34) belonging to a frame (35) integral with the flange (28), the basket (1) and the support shaft (27), said sliding lid (33) having a conjugated shape with the lid (25) of the basket (1) in order to be able to cover exactly said lid (25) with the opening (8) thereof; the sliding lid (33) being provided with an axially disposed vertical frame (36) axially immobilized by one or more lugs (37) linked to the tank (2); the basket (1) assembly with the driving shaft (26) thereof and the support shaft (27) thereof being moved horizontally by the closing device of the tank (2) in order to extract partially the basket (1) from the tank (2) to put it in the loading or unloading position.

20. Machine according to one of claims 12 and 13, characterized in that the tank (2) comprises a substantially cylindrical part (38) linked to the bottom (13) connected to the upright (11) and which extends by an essentially frustum part (39) the small base of which being able to be connected to the counter flange (14); the bottom (13) being connected to the upright (11) by fixation elements of the bolt type.

21. Machine according to claim 20, characterized in that the steam feeding is provided for by vertical duct (4) mounted and opening in the upper area of the frustum part (39) of the tank (2).

22. Machine according to claim 21, characterized in that the steam returning is provided for by vertical duct (5) mounted and opening in the upper area of the cylindrical part (38) of the tank (2), i.e. in the most elevated area of said tank (2).

23. Machine according to claim 20, characterized in that the cleaning fluid feeding duct (6) is an essentially horizontal duct opening in the lower area of the frustum part (39) of the tank (2).

24. Machine according to claim 20, characterized in that the cleaning fluid flow beginning (7) is provided for and opening in the lower area of the cylindrical part (38) of the tank (2), i.e. in the lowest area of said tank (2).

25. Machine according to claim 14, characterized in that the vegetable feeding device comprises a reception hopper (40) held by four pneumatic jacks (41) provided on the one hand on the tank (2) and on the other hand on the two upper guides (15).

26. Machine according to claim 14, characterized in that the vegetable releasing device comprises a chute (42) provided under the two lower guides (15) and above a moving belt (43); said chute (42) and said moving belt (43) being held by a structure (44) mounted on the base (10).

27. Machine according to claim 20, characterized in that the tank (2) is covered by a thermal isolating cover (45).

28. Machine according to claim 17, characterized in that the support shaft (27) penetrates into the bearing (29) which supports it directly.

29. Machine according to claim 17, characterized in that the support shaft (27) comprises a housing (46) which is liable to be mounted on a cylindrical tip (47) integral with the bearing (29).

30. Machine according to claim 1, characterized in that the basket (101) comprises a rotation shaft assembly (126) which is held by the frame (109) of the machine.

31. Machine according to one of claims 1 to 10, characterized in that it comprises a frame (109) having a base (110) and two vertical upright assemblies (111) and (112) supporting the tank (102) and the basket (101) with the rotation shaft assembly (126) thereof, the tank (102) having its closing device.

32. Machine according to claim 31, characterized in that it comprises a vegetable feeding and releasing device in order that the machine comprises one autonomous assembly only held by the frame (109).

33. Machine according to one of claims 31 and 32, characterized in that the tank (102) is fixed on one of the two upright assemblies (111) of the frame (109), said tank (102) having a counter flange (114) integral with the tank (102) and provided with an opening (115), the closing device of the tank (102) being provided by a flange (117) which is able to rest on the counter flange (114) under the action of at least an hydraulic jack (118) and which is immobilized in rotation by a guiding system (115), the rotation shaft assembly (126) of the basket (101) being integral with said hydraulic jack (118) in order that the counter flange (114), the rotation shaft assembly (126), the basket (101), the hydraulic jack (118) are integral and held by the guiding system (115) which is held by the other upright assembly (112).

34. Machine according to claim 33, characterized in that the closing device of the tank (102) comprises a mechanical safety system of the autoclave type comprising the rotation of dog assembly (121) acting on the circumference of the flange (117) and of the counter flange (114) and which penetrate into a groove (122) of the flange (117).

35. Machine according to claim 33, characterized in that the basket (101) comprises an essentially cylindrical body (123) with a bottom (124) and a lid (125) provided with an opening (108) which have a wall provided with a plurality of holes in order to allow the steam and condensat passage while retaining the vegetables ; said basket (101) being integral with the rotation shaft assembly comprising a driving shaft (126) and a flange (128), the driving shaft (126) and the flange (128) are held by two bearings (129 and 130) provided in a housing (127) integral with the closing flange (117) of the tank (102); the flange (128) having one or many holding and linking gussets (131) with the basket (101).

36. Machine according to claim 35, characterized in that the rotation control means of the basket (101) comprise a hydraulic motor (132) linked to the driving shaft (126) and held by the housing (127).

37. Machine according to claim 35, characterized in that the closing system with a horizontal movement of the basket (101) comprises a sliding lid (133) which slides on the basket (101) by means of horizontal slides (134) belonging to a frame (135) integral with the flange (128), the basket (101) and the support shaft (126), said sliding lid (133) having a conjugated shape with the lid (125) of the basket (101) in order to be able to cover exactly said lid (125) with the opening (108) thereof ; the sliding lid (133) being provided with an axial supporting vertical frame (136) axially immobilized by one or many lugs (137) linked to the tank (102) ; the basket (101) assembly with the driving shaft (126) thereof being moved horizontally by the closing device of the tank (102) in order to extract partially the basket (101) from the tank (102) to put it in the loading or unloading position.

38. Machine according to one of claims 31 and 32, characterized in that the tank (102) comprises a substantially cylindrical part (138) linked to the essentially concave bottom (113) connected to the upright (111) and which extends by an essentially concave ring part (139) able to be connected to the counter flange (114); the bottom (113) and the ring (139) being connected to the upright assembly (111).

39. Machine according to one of claims 38, characterized in that the steam feeding is provided for by a vertical duct (104) mounted and opening in the upper area of the cylindrical part (138) of the tank (102).

40. Machine according to claim 39, characterized in that the steam returning is provided for by a vertical duct (105) mounted and opening in the upper area of the cylindrical part (138) of the tank (102), i.e. in the most elevated area of said tank (102).

41. Machine according to claim 38, characterized in that the cleaning fluid feeding duct (106) is an essentially horizontal duct opening in the lower area of the bottom (139) of the tank (102).

42. Machine according to claim 38, characterized in that the cleaning fluid flow beginning(s) is/are provided and is/are opening in the lower area of the cylindrical part (138) of the tank (102), i.e. in the lowest area of said tank (102).

43. Machine according to claim 38, characterized in that the tank (102) is covered by a thermal isolating cover (145).

44. Peeling method of vegetable materials such as fruits and vegetables, characterized in that in a peeling tank with basket:
- the closing device of the tank (2) being in open position with the basket (1) in loading position, the vegetables are going down in the basket (1) by a feeding device, i.e. a reception hopper (40) in lower position given by pneumatic jacks (41), at the end of a predetermined time, the hopper (40) comes in upper position and simultaneously the tank (2) is closed by means of the closing device thereof as well as the basket (1) by means of a sliding lid (33);
- the basket (1) is brought in rotation by rotation control means and simultaneously the steam comes;
- after a predetermined time, the steam injection phase is terminated and the steam draining is open;
- when the tank pressure (2) comes to a predetermined low safety pressure and the basket (1) is immobilized in rotation and put in unloading position, the tank (2) opens by means of the closing device thereof as well as the basket (1) by means of the sliding lid (23) thereof;
- the vegetables are unloaded into a vegetable releasing device;
- at the end of the unloading, the basket (1) is rotated by 180° to be in the loading position while the hopper (40) which has been loaded since the return thereof in the upper position, is put in the lower position, the unloading time and the cycle end being given by predetermined times;
- the cleaning device acting during the loading and unloading phases.

## Patentansprüche

1. Schälmaschine für pflanzliche Lebensmittel wie Früchte und Gemüse, die einen Behälter mit einem Lade- und Entladesystem und ein Dampfzuführ- und -abführsystem aufweist, wobei der Behälter ein Korb (1, 101) ist, der in einem festen Tank (2, 102) angeordnet ist, in dem der Korb (1, 101) um die horizontale Achse des Tanks (2, 102) in eine Drehbewegung versetzbar ist, dadurch gekennzeichnet, daß der Korb (1, 101) gegenüber der Drehachse, das heißt in Bezug auf die horizontale Achse des Tanks (2, 102), geneigt ist.

2. Schälmaschine nach Anspruch 1, dadurch gekennzeichnet, daß der Korb (1, 101) einen zweiten Korb (3, 103) mit undurchlässiger Wandung aufweist, mit dem er fest verbunden ist und der zu ihm in Bezug auf die Drehachse symmetrisch ist, so daß der tote Raum um den Korb (1, 101) herum bei der Drehung im Tank (2, 102) reduziert ist.

3. Schälmaschine nach Anspruch 1, dadurch gekennzeichnet, daß die Dampfzuführung mittels einer direkt in den festen Tank (2, 102) einmündenden Leitung (4, 104) erfolgt.

4. Schälmaschine nach Anspruch 3, dadurch gekennzeichnet, daß die Dampfabführung mittels einer besonderen, direkt in den festen Tank (2, 102) einmündenden Leitung (5, 105) erfolgt.

5. Schälmaschine nach Anspruch 1, dadurch gekennzeichnet, daß der Maschinenkörper eine unabhängige Reinigungsvorrichtung aufweist.

6. Schälmaschine nach Anspruch 5, dadurch gekennzeichnet, daß die Reinigungsvorrichtung eine in den Tank (2, 102) einmündende Leitung (6, 106) für Reinigungsflüssigkeit aufweist.

7. Schälmaschine nach Anspruch 5, dadurch gekennzeichnet, daß die Reinigungsvorrichtung wenigstens eine, im unteren Teil des Tanks (2, 102) angeordnete Abflußöffnung (7, 107) für eine Entleerung aufweist.

8. Schälmaschine nach Anspruch 1, dadurch gekennzeichnet, daß der Korb (1, 101) ein Schließsystem mit Horizontalbewegung aufweist.

9. Schälmaschine nach Anspruch 1, dadurch gekennzeichnet, daß das Laden und Entladen der Lebensmittel durch dieselbe Öffnung (8, 108) im Korb (1, 101) erfolgt.

10. Schälmaschine nach Anspruch 8 oder 9, dadurch gekennzeichnet, daß das Laden und Entladen durch Mittel bewirkt wird, die dem Korb (1, 101) eine Drehbewegung verleihen und die mit dem Schließsystem mit Horizontalbewegung des Korbs (1, 101) zusammenwirken.

11. Schälmaschine nach Anspruch 1, dadurch gekennzeichnet, daß der Korb (1) einen Satz Drehwellen (26, 27) aufweist, der im Tank (2) gelagert ist.

12. Schälmaschine nach einem der vorangehenden Ansprüche, dadurch gekennzeichnet, daß sie ein aus einem Sockel (10) und zwei senkrechten Stützen (11, 12), die den Tank (2) und drehbar den Korb (1) mit seinem Satz Wellen (26, 27) tragen, gebildetes Gestell (9) aufweist, wobei der Tank (2) eine Schließvorrichtung aufweist.

13. Schälmaschine nach Anspruch 12, dadurch gekennzeichnet, daß sie ein Zuführ- und Abführsystem für pflanzliche Lebensmittel aufweist, so daß die Maschine eine einzige, selbständige vom Gestell (9) getragene Einheit bildet.

14. Schälmaschine nach Anspruch 12 oder 13, dadurch gekennzeichnet, daß der Tank (2) an den beiden Stützen (11, 12) des Gestells befestigt ist, und zwar mit seinem Boden an der einen Stütze (11) und an der anderen Seite mit einem Gegenflansch (14), der mit dem Tank (2) fest verbunden und mit einer Öffnung (15) versehen ist, wobei der Gegenflansch (14) von vier mittels einer an der anderen Stütze (12) angebrachten Stützplatte (16) gehaltener Führungen (15) getragen ist, wobei die Schließvorrichtung des Tanks (2) von einem mittels wenigstens eines Arbeitszylinders (18), der durch die vier Führungen (15) drehfest gehalten ist, auf dem Gegenflansch (14) gelagerten Flansch (17) gebildet ist.

15. Schälmaschine nach Anspruch 14, dadurch gekennzeichnet, daß die Schließvorrichtung des Tanks (2) vier Arbeitszylinder (18) aufweist, deren Gehäuse (19) am Flansch (17) angebracht ist und deren Kolben mit der Stützplatte (16) fest verbunden ist.

16. Schälmaschine nach Anspruch 15, dadurch gekennzeichnet, daß die Schließvorrichtung des Tanks (2) ein mechanisches Sicherheitssystem aufweist, das aus Elementen (21) gebildet ist, die in eine Rille (22) des Flansches (17) eingreifen.

17. Schälmaschine nach Anspruch 14, dadurch gekennzeichnet, daß der Korb (1) von einem zylindrischen Körper (23) mit einem Boden (24) und einem mit einer Öffnung (8) versehenen Deckel (25), die beide eine mit zahlreichen Öffnungen zum Durchlassen des Dampfes und des Kondensats unter gleichzeitigem Zurückhalten der pflanzlichen Lebensmittel versehene Wandung aufweisen, gebildet ist, wobei der Korb (1) mit dem von einer Antriebswelle (26), einem Flansch (28) und einer Stützwelle (27), die miteinander verbunden sind, gebildeten Satz Drehwellen fest verbunden ist und wobei die Stützwelle (27) in einem in der Stütze (11) auf der Seite des Bodens (13) des Tanks (2) angebrachten Lager (29) gelagert ist, während die Antriebswelle (26) und der Flansch (28) in einem im Flansch (17) der Schließvorrichtung des Tanks (2) angeordneten Lager (30) gelagert ist, wobei der Flansch (28) ein oder mehrere Stützelemente (31), die ihn mit dem Korb (1) verbinden, aufweist.

18. Schälmaschine nach Anspruch 17, dadurch gekennzeichnet, daß die Mittel, die dem Korb (1) eine Drehbewegung verleihen, von einem mit der Antriebswelle (26) verbundenen und vom Flansch (17) für das Verschließen des Tanks (2) gehaltenen hydraulischen Motor (32) gebildet sind.

19. Schälmaschine nach Anspruch 17, dadurch gekennzeichnet, daß die Schließvorrichtung mit Horizontalbewegung des Korbs (1) einen gleitenden Deckel (33) aufweist, der auf dem Korb (1) mittels horizontaler, zu einem mit dem Flansch (28), dem Korb (1) und der Stützwelle (27) fest verbundenen Rahmen (35) gehörender horizontaler Gleitschienen (34) gleitet, wobei der gleitende Deckel (33) eine zu der des Deckels (25) des Korbs (1) komplementäre Form aufweist, so daß er den Deckel (25) mit dessen Öffnung (8) genau abdecken kann, wobei der gleitende Deckel (33) einen axial angeordneten vertiklalen Rahmen (36) aufweist, der mittels einer oder mehrerer, mit dem Tank (2) verbundener Halterungen (37) axial festgelegt ist, und wobei der Korb (1) zusammen mit seiner Antriebswelle (26) und seiner Stützwelle (27) durch die Schließvorrichtung des Tanks (2) horizontal versetzt werden, so daß der Korb (1) teilweise aus dem Tank (2) herausgezogen wird, um ihn in eine Lade- und Entladestellung zu bringen.

20. Schälmaschine nach Anspruch 12 oder 13, dadurch gekennzeichnet, daß der Tank (2) aus einem Teil (38) von im wesentlichen zylindrischer Form gebildet ist, das sich an den mit der Stütze (11) verbundenen Boden (13) anschließt und durch ein im wesentlichen kegelstumpfförmiges Teil (39) verlängert wird, dessen kleinere Grundseite mit dem Gegenflansch (14) verbunden ist, wobei der Boden (13) mit der Stütze (11) durch Befestigungselemente von der Art eines Bolzen verbunden ist.

21. Schälmaschine nach Anspruch 20, dadurch gekennzeichnet, daß die Versorgung mit Dampf durch eine senkrechte Leitung (4) erfolgt, die im oberen kegelstumpfförmigen Teil (39) des Tanks (2) angeordnet ist und dort einmündet.

22. Schälmaschine nach Anspruch 21, dadurch gekennzeichnet, daß die Dampfrückführung durch eine senkrechte Leitung (5) erfolgt, die in der oberen Zone des zylindrischen Teils (38) des Tanks (2), das heißt in der höchsten Zone des Tanks (2), angeordnet ist und dort einmündet.

23. Schälmaschine nach Anspruch 20, dadurch gekennzeichnet, daß die Versorgungsleitung (6) für die Reinigungsflüssigkeit eine im wesentlichen horizontale Leitung ist, die in die untere Zone des kegelstumpfförmigen Teils (39) des Tanks (2) einmündet.

24. Schälmaschine nach Anspruch 20, dadurch gekennzeichnet, daß die Abflußöffnung (7) für die Reinigungsflüssigkeit in der unteren Zone des zylindrischen Teils (38) des Tanks (2), das heißt in der niedrigsten Zone des Tanks (2), angeordnet ist und dort einmündet.

25. Schälmaschine nach Anspruch 14, dadurch gekennzeichnet, daß die Zuführvorrichtung für pflanzliche Lebensmittel einen von vier pneumatischen Arbeitszylindern (41), die einerseits auf dem Tank (2) und andererseits auf den beiden oberen Führungen (15) angebracht sind, gestützten Trichter (40) aufweist.

26. Schälmaschine nach Anspruch 14, dadurch gekennzeichnet, daß das Abführsystem für pflanzliche Lebensmittel eine unterhalb der beiden unteren Führungen (15) und oberhalb eines Förderbands (43) angeordnete Rutsche (42) aufweist, wobei die Rutsche (42) und das Förderband (43) durch ein auf dem Sockel (10) angebrachtes Gestell (44) gehalten werden.

27. Schälmaschine nach Anspruch 20, dadurch gekennzeichnet, daß der Tank (2) mit einer thermischen Isolation (45) verkleidet ist.

28. Schälmaschine nach Anspruch 17, dadurch gekennzeichnet, daß die Stützwelle (27) in das Lager (29) hineinragt, in dem sie direkt gelagert ist.

29. Schälmaschine nach Anspruch 17, dadurch gekennzeichnet, daß die Stützwelle (27) eine Ausnehmung (46) aufweist, die auf einen mit dem Lager (29) fest verbundenen zylindrischen Zapfen (47) gepaßt ist.

30. Schälmaschine nach Anspruch 1, dadurch gekennzeichnet, daß der Korb (101) einen Satz Drehwellen (126) aufweist, der vom Gestell (109) der Maschine getragen ist.

31. Schälmaschine nach einem der Ansprüche 1 bis 10, dadurch gekennzeichnet, daß sie ein aus einem Sockel (110) und zwei Einheiten senkrechter Stützen (111, 112), die den Tank (102) und drehbar den Korb (101) mit seinem Satz Wellen (126) tragen, gebildetes Gestell (109) aufweist, wobei der Tank (102) eine Schließvorrichtung aufweist.

32. Schälmaschine nach Anspruch 31, dadurch gekennzeichnet, daß sie ein Zuführ- und Abführsystem für pflanzliche Lebensmittel aufweist, so daß die Maschine eine einzige, selbständige vom Gestell (109) getragene Einheit bildet.

33. Schälmaschine nach Anspruch 31 oder 32, dadurch gekennzeichnet, daß der Tank (102) an einer der beiden Einheiten von Stützen (111) des Gestells (109) angebracht ist, wobei der Tank (102) mit einem Gegenflansch (114) verbunden ist, der mit dem Tank (102) fest verbunden und mit einer Öffnung (115) versehen ist, wobei die Schließvorrichtung des Tanks (102) von einem Flansch (117) gebildet ist, der unter der Wirkung wenigstens eines Arbeitszylinders (118) auf dem Gegenflansch (114) aufliegt, und durch ein Führungssystem (115) drehfest gehalten ist, wobei der Satz Drehwellen (126) des Korbs (101) mit dem Arbeitszylinder (118) derart fest verbunden ist, daß der Gegenflansch (114), der Satz Drehwellen (126) des Korbs (101), der Arbeitszylinder (118) miteinander fest verbunden sind und vom Führungssystem (115), das an der anderen Einheit von Stützen (112) angebracht ist, gehalten werden.

34. Schälmaschine nach Anspruch 33, dadurch gekennzeichnet, daß die Schließvorrichtung des Tanks (102) ein mechanisches Sicherheitssystem von der Art eines Autoklaven aufweist, das aus einem drehbaren Satz von Zungen (121) gebildet ist, die mit dem Umfang des Flansches (117) und des Gegenflansches (114) zusammenwirken und in eine Rille (122) des Flansches (117) eingreifen.

35. Schälmaschine nach Anspruch 33, dadurch gekennzeichnet, daß der Korb (101) von einem zylindrischen Körper (123) mit einem Boden (124) und einem mit einer Öffnung (108) versehenen Deckel (125), die beide eine mit zahlreichen Öffnungen zum Durchlassen des Dampfes und des Kondensats unter gleichzeitigem Zurückhalten der pflanzlichen Lebensmittel versehene Wandung aufweisen, gebildet ist, wobei der Korb (101) mit dem von einer Antriebswelle (126) und einem Flansch (128) gebildeten Satz Drehwellen fest verbunden ist und wobei die Antriebswelle (126) und der Flansch (128) in zwei in einem mit dem Flansch (117) der Schließvorrichtung des Tanks (102) verbundenen Gehäuse (127) angeordneten Lagern (129, 130) gelagert sind, wobei der Flansch (128) ein oder mehrere Stützelemente (131), die ihn mit dem Korb (101) verbinden, aufweist.

36. Schälmaschine nach Anspruch 35, dadurch gekennzeichnet, daß die Mittel, die dem Korb (101) eine Drehbewegung verleihen, von einem mit der Antriebswelle (126) verbundenen und vom Gehäuse (127) gehaltenen hydraulischen Motor (132) gebildet sind.

37. Schälmaschine nach Anspruch 35, dadurch gekennzeichnet, daß die Schließvorrichtung mit Horizontalbewegung des Korbs (101) einen gleitenden Deckel (133) aufweist, der auf dem Korb (101) mittels horizontaler, zu einem mit dem Flansch (128), dem Korb (101) und der Antriebswelle (126) fest verbundenen Rahmen (135) gehörender horizontaler Gleitschienen (134) gleitet, wobei der gleitende Deckel (133) eine zu der des Deckels (125) des Korbs (101) komplementäre Form aufweist, so daß er den Deckel (125) mit dessen Öffnung (108) genau abdecken kann, wobei der gleitende Deckel (133) einen axial angeordneten vertiklalen Rahmen (136), der mittels einer oder mehrerer, mit dem Tank (102) verbundener Halterungen (137) axial festgelegt ist, aufweist und wobei der Korb (101) zusammen mit seiner Antriebswelle (126) durch die Schließvorrichtung des Tanks (102) horizontal versetzt wird, so daß der Korb (101) teilweise aus dem Tank (102) herausgezogen wird, um ihn in eine Lade- und Entladestellung zu bringen.

38. Schälmaschine nach Anspruch 31 oder 32, dadurch gekennzeichnet, daß der Tank (102) aus einem Teil (138) von im wesentlichen zylindrischer Form gebildet ist, das sich an den mit der Stütze (111) verbundenen im wesentlichen konkaven Boden (113) anschließt und durch ein im wesentlichen ringförmiges konkaves Teil (139) verlängert wird, das mit dem Gegenflansch (114) verbunden ist, wobei der Boden (113) und der Ring (139) mit der Einheit der Stützen (111) verbunden sind.

39. Schälmaschine nach Anspruch 38, dadurch gekennzeichnet, daß die Versorgung mit Dampf durch einen senkrechten Kanal (104) erfolgt, der im oberen kegelstumpfförmigen Teil (139) des Tanks (102) angeordnet ist und dort einmündet.

40. Schälmaschine nach Anspruch 39, dadurch gekennzeichnet, daß die Dampfrückführung durch eine senkrechte Leitung (105) erfolgt, die in der oberen Zone des zylindrischen Teils (138) des Tanks (12), das heißt in der höchsten Zone des Tanks (102), angeordnet ist und dort einmündet.

41. Schälmaschine nach Anspruch 38, dadurch gekennzeichnet, daß die Versorgungsleitung (106) für die Reinigungsflüssigkeit eine im wesentlichen horizontale Leitung ist, die in die untere Zone des Bodens (139) des Tanks (102) einmündet.

42. Schälmaschine nach Anspruch 38, dadurch gekennzeichnet, daß die Abflußöffnung(en) (107) für die Reinigungsflüssigkeit in der unteren Zone des zylindrischen Teils (138) des Tanks (102), das heißt in der niedrigsten Zone des Tanks (102), angeordnet ist (sind) und dort einmündet (einmünden).

43. Schälmaschine nach Anspruch 38, dadurch gekennzeichnet, daß der Tank (102) mit einer thermischen Isolation (145) verkleidet ist.

44. Verfahren zum Schälen von pflanzlichen Lebensmitteln wie Früchten und Gemüsen, dadurch gekennzeichnet, daß in einem Schältank mit einem Korb
- bei in geöffneter Stellung befindlicher Schließvorrichtung des Tanks (2) und in Ladestellung befindlichem Korb (1) die pflanzlichen Lebensmittel über eine Zuführvorrichtung, das heißt über einen mittels Arbeitszylinder (41) in einer unteren Stellung gehaltenen Trichter (40), in den Korb (1) gelangen, wobei der Trichter (40) nach einer vorbestimmten Zeit in eine obere Stellung geht und gleichzeitig der Tank (2) mittels seiner Schließvorrichtung und der Korb (1) mittels eines gleitenden Deckels (33) verschlossen werden ;
- der Korb (1) durch Mittel zum Verleihen einer Drehbewegung in eine solche versetzt wird und gleichzeitig Dampf zugeführt wird ;
- nach einer vorbestimmten Zeit die Dampfzuführphase beendet ist und eine Dampfableitung geöffnet wird ;
- wenn der Druck des Dampfes im Tank (2) auf einem vorbestimmten unteren Sicherheitswert angelangt ist und der Korb (1) zum Stillstand gekommen und in Entladestellung gebracht ist, sich der Tank (2) mittels seiner Schließvorrichtung und der Korb (1) mittels seines gleitenden Deckels (33) öffnen ;
- die pflanzlichen Lebensmittel in ein Abführsystem entladen werden ;
- der Korb (1) nach Beendigung des Entladevorgangs um 180° gedreht wird, um in die Ladestellung zu gehen, während der Trichter (40), der seit seiner Rückbringung in die obere Stellung befüllt worden ist, in die untere Stellung geht, wobei die Entladezeit und das Zyklusende durch vorbestimmte Zeiten gegeben sind ;
- eine Reinigungsvorrichtung während der Lade- und Entladephasen betrieben wird.
